# EUROPEAN PATENT SPECIFICATION

(11) **EP 0 514 616 B1**
(45) Date of publication and mention of the grant of the patent: **14.01.1998**
(21) Application number: 91830221.7
(22) Date of filing: 24.05.1991
(51) Int. Cl.: B29C 49/00

(54) **Process for producing hollow bodies of thermoplastic material**
Verfahren zur Herstellung von Hohlkörpern aus thermoplastischem Material
Procédé pour la fabrication de corps creux en matière thermoplastique

(43) Date of publication of application: 25.11.1992
(73) Proprietor: SELMAT INDUSTRIALE S.P.A., 10090 Rosta (Torino) (IT); C.R.S. S.r.l., 10060 Frossasco (Torino) (IT)
(72) Inventor: Maccherrone, Michele, I-10090 Rosta (IT); Cesano, Franco, I-10060 San Secondo di Pinerolo (IT)
(74) Representative: Marchitelli, Mauro

(56) References cited:
- EP-A- 373 618
- CH-A- 380 935
- CH-A- 390 525
- DE-A- 1 504 900
- DE-A- 3 805 449
- GB-A- 1 465 564
- US-A- 3 281 301
- US-A- 4 294 498

## Description

The present invention relates to a process for producing hollow bodies of thermoplastic material.

For producing hollow bodies with the compression moulding technology, the standard practice is to separately mould two half-shells of thermoplastic material, which are then joined together (e.g. ultrasonic welded) at the assembly stage. Economically, the above process presents numerous drawbacks in that it is fairly complex and normally involves at least three processing stages: a first stage for moulding the first half-shell; a second stage for moulding the second half-shell (frequently differing in shape from the first); and a third stage for joining the two half-shells together.

DE-A-15 04 900 shows a method for manufacturing a hollow body, wherein two sheets of thermoplastic material are stretched in a frame and positioned between two half-moulds. The two sheets are progressively heated and compressed air is injected in the hollow space between the sheets. In the final phase of the moulding method, a suction force is applied to the sheets to bring them into contact with corresponding walls of the half-moulds.

A different method for producing hollow bodies of thermoplastic material is disclosed in EP-A-0 373 618. In this method, two sheets of thermoplastic material are placed in a mould assembly which is provided with a nozzle for injecting pressurised air between the sheets. The half-moulds of the mould assembly are then tightened together and the mould assembly thus prepared is brought into a heating furnace to be heated to a softening temperature of the sheets. Then, the pressurised gas is introduced between the sheets so that the sheets are formed along the forming surfaces of the moulds. As the forming step proceeds, the temperature is increased to the melting point of the resin, in order to weld together the peripheral portions of the resin sheets.

CH-A-390 535 discloses a method for blow-moulding hollow bodies formed by two sheets of plastic material welded together along their edges. The two sheets are placed between two half-moulds in a plastic state. By closing the half-moulds, the portion of the sheets extending outside of the moulds is cut away and the two sheets are moulded by blowing air between them.

GB-A-1 465 564 discloses a process for preparing a moulded article in accordance with the preamble of claim 1, wherein two sheets of thermoplastic material are placed between opposing half-moulds. At least one of the opposed surfaces of the sheets is shaped to define fluid passageways between the sheets and at least one of the half-moulds is provided with a mould cavity. The sheets are moulded and joined together by closing the half-moulds and introducing a fluid into the fluid passageways to distend the sheets into the mould cavity.

It is an object of the present invention to provide a straightforward, low-cost process for producing hollow bodies of thermoplastic material.

According to the present invention, this object is achieved by a method according to claim 1.

The present invention will be described with reference to the accompanying drawings, in which:
- figs.1 to 4 show successive stages in the process according to the present invention;
- fig.5 shows a view in perspective of a pallet produced using the process according to the present invention;
- fig.6 shows a section along line VI-VI in fig.5;
- figs.7 to 13 show perspective and partially-sectioned views of hollow bodies produced according to the present invention.

Number 1 in Fig.s 5 and 6 indicates a pallet having a load-bearing base 2 formed by joining two sheets of thermoplastic material, conveniently polypropylene, placed on top of each other, modeled and joined together using the process according to the present invention.

Said sheets may conveniently be formed from waste material, such as recycled plastic scrap. The upper sheet conveniently presents truncated-cone-shaped portions 5 for producing an antislip upper surface. The lower sheet conveniently presents a number of downturned truncated-cone-shaped portions 6 defining a number of truncated-cone-shaped cavities 7 forming a reinforcing structure.

Pallet 1 presents a number of feet 8 conveniently formed from waste material (e.g. compressed sawdust) and secured (e.g. screwed or bolted) firmly to the underside of the lower sheet.

Fig.s 1 to 4 show, by way of example, the various stages in the production of a hollow body, in this case, pallet 1.

Number 10 in Fig.s 1 to 4 indicates a mold comprising an upper half mold 11 and a lower half mold 12, each having a number of cavities 16 defined by truncated-cone-shaped walls 17 and communicating with one another via a network of channels 18.

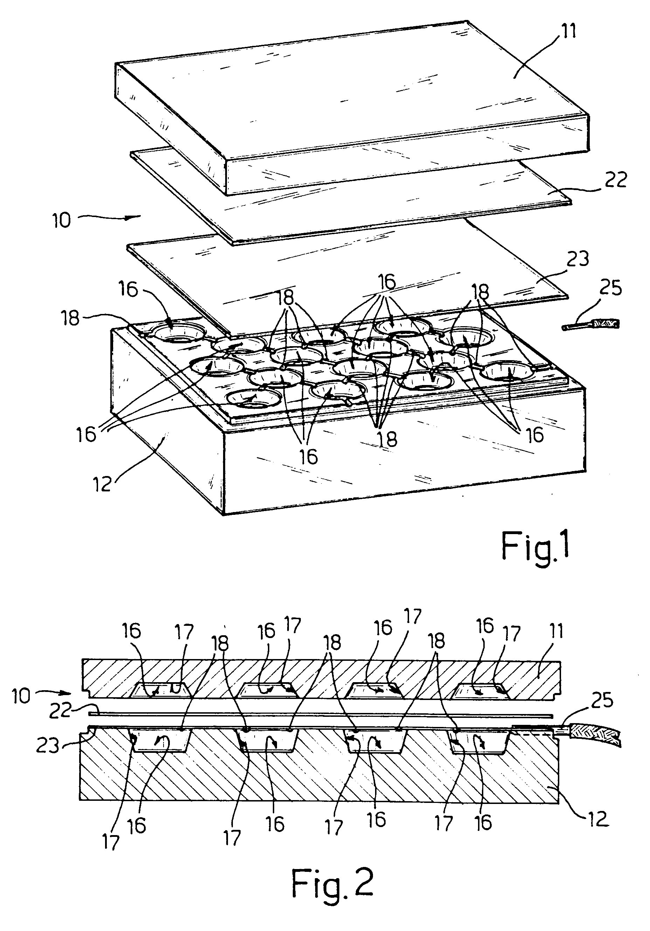

Fig.2 shows a first stage in the formation of pallet 1 according to the present invention, wherein a first sheet 22 and a second sheet 23 of thermoplastic material are inserted, one on top of the other, between half molds 11 and 12.

Before being inserted inside mold 10, sheets 22 and 23 are plasticized by heating them to roughly 150-180°C. A fluid supply pipe 25, normally an air pipe, is then inserted between plasticized sheets 22 and 23 to prevent them from adhering to each other.

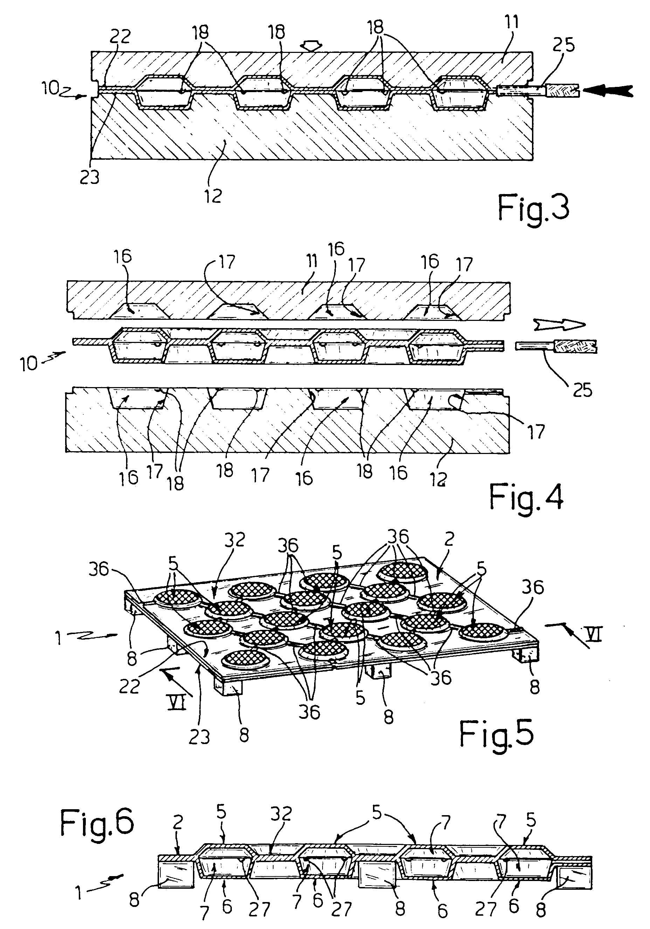

As soon as supply pipe 25 is inserted, mold 10 is closed by lowering half mold 11 on to half mold 12 so as to compress sheets 22 and 23, the mating portions of which are solidified, due to the plasticized nature of sheets 22 and 23 (Fig.3).

At the same time, or immediately following the above operations, molding fluid, usually compressed air, is supplied by pipe 25 at a higher pressure than that previously separating sheets 22 and 23, and sufficient for molding sheets 22 and 23 against walls 17 of cavities 16 in half molds 10 and 11.

As with the normal compression molding technique, on contacting walls 17, sheets 22 and 23 cool and harden to a rigidity corresponding to that of the finished part. Pipe 25 is then removed (Fig.4) and half molds 11 and 12 opened to extract from mold 10 the finished pallet 1 comprising sheets 22 and 23 welded together and molded by half molds 11 and 12, and inner cavities 7 communicating via a network of channels 27 (defined by channels 18 of half molds 11 and 12), and forming a reinforcing box structure.

The high-pressure fluid may the same used for separating sheets 22 and 23, or a different fluid, e.g. a liquid or polyurethane foam injected in liquid form at high pressure, for molding sheets 22 and 23 against the walls of half molds 11 and 12 and providing for greater rigidity of hollow body 1.

To those skilled in the art it will be clear that changes may be made to the process as described and illustrated herein without, however, departing from the scope of the present invention.

For example, different methods, other than the one described using relatively low-pressure fluid, may be employed for preventing sheets 22 and 23 from adhering to each other at the initial stages; hollow body 1 may be formed by simultaneously molding more than two sheets; sheet 22 and/or 23 may present a layer of covering material, such as artificial leather, PVC or fabric, molded together with sheets 22 and 23 for enhancing the appearance of the outer surface of hollow body 1; hollow body 1 may also comprise reinforcing or finish elements made of composite material or metal and secured to sheets 22 and 23 during the molding process; for example, pallet 1 may be molded together with a number of feet made of compressed waste material.

With reference to Fig.5, pallet 1 presents a substantially square, antislip supporting surface 32 comprising integral sheets 22 and 23 molded to form said truncated-cone-shaped portions 5 and 6 produced by sheets 22 and 23 expanding inside cavities 17. Portions 5 are connected together by a number of straight projections 36 formed by sheets 22 and 23 expanding inside channels 18 and which also provide for reinforcing surface 32.

Fig.s 7 to 13 show further examples of hollow bodies produced using the process according to the present invention.

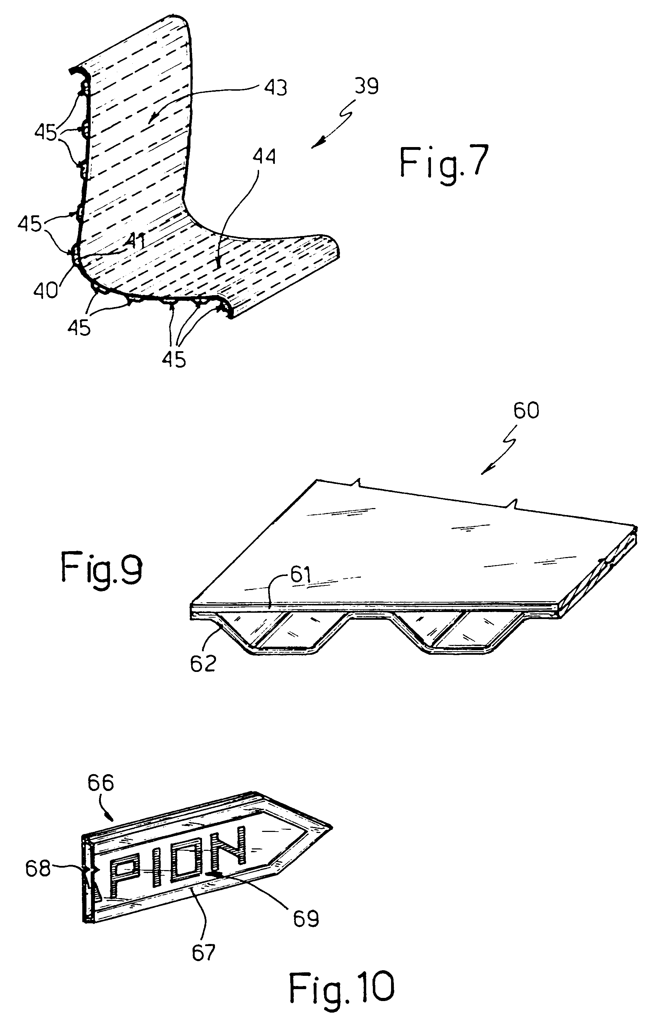

Fig.7 shows the load-bearing structure of a vehicle seat 39, in particular a car seat, comprising a first and second sheet 40 and 41 of plastic material molded together and defining the seatback 43 and seat portion 44 of seat 39. Sheet 41 is molded to define a number of elongated, substantially rectangular-section reinforcing cavities 45.

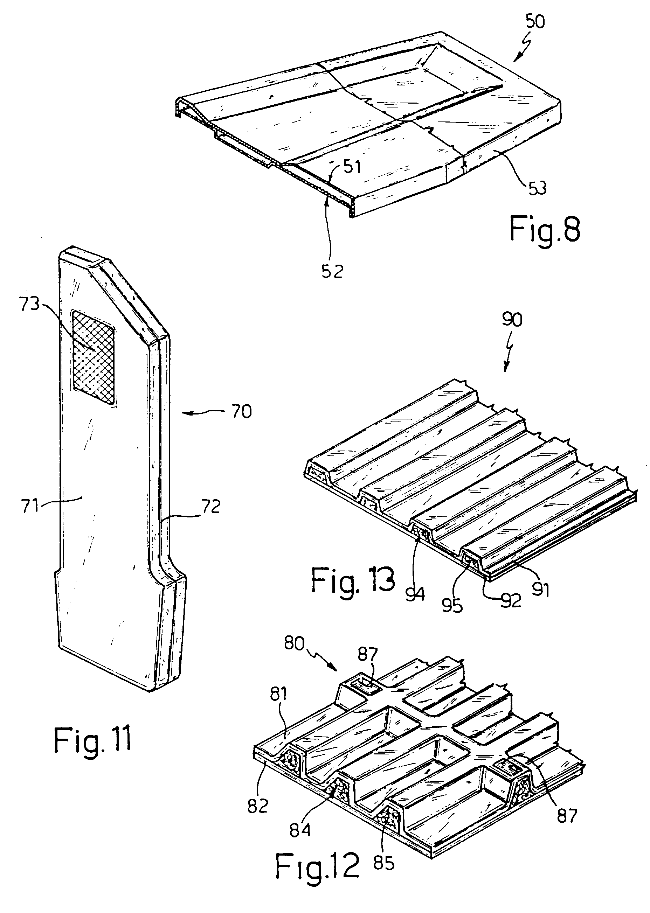

Fig.8 shows a vehicle parcel shelf 50 comprising a first and second sheet 51 and 52 of plastic material molded together according to the above process, and a layer 53 of upholstering fabric applied to sheet 51 during the molding process.

The process according to the present invention also provides for producing numerous items for a wide variety of different applications. Fig.9, for example, shows a portion of the loading deck 60 of a vehicle luggage compartment, which is roughly rectangular and comprises two molded, integral sheets 61 and 62 of plastic material.

Fig.10 shows a road sign 66 comprising two integral sheets 67 and 68, sheet 67 presenting a flat surface 69 on which the sign is printed.

Fig.11 shows a curb marker 70 comprising two integral, roughly rectangular sheets 71 and 72 having rectangular cavities (not shown) housing reflectors 73.

Fig.12 shows a view in perspective of a modular element 80 comprising two integral sheets 81 and 82 forming a reinforcing box structure comprising a number of elongated cavities 84 filled with polyurethane foam 85. Modular element 80 may conveniently be employed for soundproofing vehicles, or for free-form furniture or partition walls, for which purpose it prevents a number of metal inserts 87 molded together with sheets 81 and 82, for connecting elements 80 into a complex structure.

Fig.13 shows a view in perspective of a platform 90 for machine tools, comprising two integral sheets 91 and 92 forming a reinforcing box structure in turn comprising a number of elongated cavities 94 filled with polyurethane foam 95.

The present invention therefore clearly provides for straightforward, low-cost production of hollow bodies of thermoplastic material, by enabling the two half shells to be molded and joined in one single operation.

## Claims

1. A process for producing hollow bodies (1) of thermoplastic material, comprising the steps of:
-a- heating at least two sheets (22,23) of thermoplastic material to their plasticising temperature,
-b- inserting the plasticized sheets (22,23) one on top of the other between half-moulds (11, 12), at least one of which has a plurality of cavities (16) communicating with one another via a network of channels (18),
-c- closing the half moulds (11, 12) and subjecting the sheets (22,23) outside said cavities (16) to a compression force produced by the mechanical compression of the half-moulds (11, 12) in order to join together and weld the mating portions of the sheets (22,23) by means of heat,
-d- forming a plurality of hollow portions (7) in correspondence with said cavities(16) by injecting a fluid between said sheets (22,23) at a pressure sufficient for pressing at least one sheet (22,23) against the wall of said cavities so that in correspondence with said cavities (16) the sheets (22,23) are subjected to a moulding force produced by said fluid,
-e- cooling and hardening the hollow body (1) by contact with the walls of the half moulds (11,12), and
-f- opening said half moulds (11, 12) and extracting the hollow body (1)
**characterized in that**
the channels (18) are positioned on the parting surface of said half moulds and extend from the lateral walls (17) of said cavities and that in step -d- the at least one sheet is pressed against the walls of the channels by the pressure of said fluid.

2. A process as claimed in Claim 1, characterised by the fact that it comprises a stage, intermediate stages -b- and -c-, wherein a fluid is blown between said sheets (22,23) to prevent them from adhering to each other.

3. A process as claimed in Claim 1 or 2, characterised by the fact that it comprises a stage, subsequent to stage -c-, wherein said hollow portions (7) are filled with solidifiable fluid.

4. A process as claimed in Claim 3, characterised by the fact that said solidifiable fluid is polyurethane foam.

5. A process as claimed in any one of the foregoing Claims, characterised by the fact that it comprises a stage wherein a layer (53) of covering material is applied to at least one of said sheets (22, 23).

6. A process as claimed in Claim 5, characterised by the fact that said layer comprises a sheet (53) of fabric.

## Patentansprüche

1. Verfahren zur Herstellung von Hohlkörpern (1) aus einem thermoplastischen Material, wobei das Verfahren folgende Schritte enthält:
-a- Erhitzen von zumindest zwei Tafeln (22, 23) aus einem thermoplastischen Material auf ihre Plastifizierungstemperatur,
-b- Einsetzen der plastifizierten Tafeln (22,23) übereinander zwischen Halbformen (11, 12), von denen zumindest eine mit einer Vielzahl von Hohlräumen (16) versehen ist, die miteinander über ein Netz von Kanälen (18) in Verbindung stehen,
-c- Schließen der Halbformen (11, 12) und Aufbringen einer Druckkraft außerhalb der Hohlräume (16) auf die Tafeln (22, 23), wobei die Druckkraft durch das mechanische Zusammendrücken der Halbformen (11, 12) erzeugt wird, um die zusammenpassenden Teile der Tafeln (22, 23) miteinander zu verbinden und unter Hitze zu verschweißen,
-d- Ausbilden einer Vielzahl von hohlen Bereichen (7) in Übereinstimmung mit den Hohlräumen (16), indem zwischen die Tafeln (22, 23) ein Fluid unter einem Druck eingespritzt wird, der ausreicht, um zumindest eine Tafel (22, 23) gegen die Wand der Hohlräume zu drücken, so daß die Tafeln (22, 23) in Übereinstimmung mit den Hohlräumen (16) einer Formkraft unterworfen werden, die mit dem Fluid erzeugt wird,
-e- Abkühlen und Aushärten des Hohlkörpers (1) durch eine Berührung mit den Wänden der Halbformen (11, 12), und
-f- Öffnen der Halbformen (11, 12) und Entnehmen des Hohlkörpers (1)
dadurch gekennzeichnet, daß
die Kanäle (18) auf der Trennfläche der Halbformen angeordnet sind und von den Seitenwänden (17) der Hohlräume verlaufen, und daß im Schritt -d- die zumindest eine Tafel durch den Druck des Fluids gegen die Wände der Kanäle gepreßt wird.

2. Verfahren gemäß Anspruch 1, dadurch gekennzeichnet, daß das Verfahren einen Schritt zwischen den Schritten -b- und -c-enthält, bei dem ein Fluid zwischen die Tafeln (22, 23) geblasen wird, um zu verhindern, daß sie aneinander haften.

3. Verfahren gemäß Anspruch 1 oder 2, dadurch gekennzeichnet, daß das Verfahren einen auf den Schritt -c- folgenden Schritt enthält, bei dem die hohlen Bereiche (7) mit einem verfestigbaren Fluid gefüllt werden.

4. Verfahren gemäß Anspruch 3, dadurch gekennzeichnet, daß das verfestigbare Fluid Polyurethanschaum ist.

5. Verfahren gemäß irgendeinem der bisherigen Ansprüche, dadurch gekennzeichnet, daß das Verfahren einen Schritt enthält, bei dem eine Schicht (53) aus einem Überzugsmaterial auf zumindest eine der Tafeln (22, 23) aufgebracht wird.

6. Verfahren gemäß Anspruch 5, dadurch gekennzeichnet, daß die Schicht eine Tafel (53) eines Gewebes enthält.

## Revendications

1. Procédé destiné à fabriquer des corps creux (1) en matériau thermoplastique, comprenant les étapes consistant à :
a) chauffer au moins deux feuilles (22, 23) de matériau thermoplastique jusqu'à leur température de plastification,
b) insérer les feuilles plastifiées (22, 23) l'une sur l'autre entre des demi-moules (11, 12), dont au moins l'un a plusieurs cavités (16) communiquant les unes avec les autres par l'intermédiaire d'un réseau de canaux (18),
c) fermer les demi-moules (11, 12) et soumettre les feuilles (22, 23) à l'extérieur desdites cavités (16) à une force de compression produite par la compression mécanique des demi-moules (11, 12) afin de réunir et de souder les parties correspondantes des feuilles (22, 23) par la chaleur,
d) former plusieurs parties creuses (7) en correspondance avec lesdites cavités (16) en injectant un fluide entre lesdites feuilles (22, 23) à une pression suffisante pour presser au moins une feuille (22, 23) contre la paroi desdites cavités de sorte que, en correspondance avec lesdites cavités (16) les feuilles (22, 23) sont soumises à une force de moulage produite par ledit fluide,
e) refroidir et durcir le corps creux (1) par contact avec les parois des demi-moules (11, 12), et
f) ouvrir lesdits demi-moules (11, 12) et extraire le corps creux (1), caractérisé en ce que les canaux (18) sont positionnés sur la surface de séparation desdits demi-moules et s'étendent des parois latérales (17) desdites cavités et en ce que dans l'étape d) au moins une feuille est pressée contre les parois des canaux par la pression dudit fluide.

2. Procédé selon la revendication 1, caractérisé par le fait qu'il comprend une étape, des étapes intermédiaires b) et c), dans lequel un fluide est injecté entre lesdites feuilles (22, 23) pour les empêcher de coller l'une à l'autre.

3. Procédé selon la revendication 1 ou 2, caractérisé par le fait qu'il comprend une étape, ultérieure à l'étape c), dans lequel lesdites parties creuses (7) sont remplies d'un fluide pouvant se solidifier.

4. Procédé selon la revendication 3, caractérisé par le fait que ledit fluide pouvant se solidifier est de la mousse de polyuréthanne.

5. Procédé selon l'une quelconque des revendications précédentes, caractérisé par le fait qu'il comprend une étape dans laquelle une couche (53) de matériau de revêtement est appliquée sur au moins l'une desdites feuilles (22, 23).

6. Procédé selon la revendication 5, caractérisé par le fait que ladite couche comprend une feuille (53) de tissu.
